# EUROPEAN PATENT SPECIFICATION

(11) **EP 0 409 144 B1**
(45) Date of publication and mention of the grant of the patent: **05.10.1994**
(21) Application number: 90113612.7
(22) Date of filing: 16.07.1990
(51) Int. Cl.: C04B 35/52, H04R 7/02, H04R 31/00

(54) **Speaker diaphragm and process for producing the same**
Lautsprechermembran und Verfahren zu ihrer Herstellung
Diaphragme pour haut-parleurs et son procédé de fabrication

(30) Priority: 21.07.1989 JP 190297/89
(43) Date of publication of application: 23.01.1991
(73) Proprietor: NISSHINBO INDUSTRIES, INC., Chuo-ku, Tokyo 103 (JP)
(72) Inventor: Saito, Kazuo, c/o Nisshinbo Industries, Inc., Adachi-ku, Tokyo 123 (JP)
(74) Representative: Zinnecker, Armin, Dipl.-Ing.

(56) References cited:
- EP-A- 372 389
- EP-A- 0 336 448
- FR-A- 2 242 330
- WORLD PATENT INDEX LATEST DATABASE, accession no. 89-058475, week 8, 1989, Derwent Publications Ltd, London, GB; & JP-A-64 011 499 (SHINGIJUTSU KAIHAT. et al.) 17-01-1989
- IDEM

## Description

The present invention relates to a process for producing a speaker diaphragm.

Speakers which convert a given electric energy to an acoustic energy are in wide use in the fields such as music appreciation, communication, broadcasting and the like. In speakers which are used for music appreciation, for example, and must be able to reproduce a sound source with good fidelity, it is known that the diaphragm used therein must have required physical properties.

That is, the diaphragm used for such speakers must have physical properties of being light weight and having a high Young's modulus, as well as a high propagation speed.

Many of conventionally used speaker diaphragms, however, have problems in the above-mentioned physical properties. For example, paper type diaphragms made of so-called cone paper are light weight but are not sufficiently high in Young's modulus; and metallic diaphragms are satisfactory in Young's modulus, etc. but are heavy.

Meanwhile, there have been developed diaphragms made of a composiste material, obtained by using different starting materials in combination, and have the merits of respective starting materials. However, the diaphragms require a complicated production process, making the cost high.

In the patent appliciation JP-A-64011499 a method for making carbon diaphragms for e.g. loud speakers is described by treating aromatic polyimide films at temperatures higher than 2,000 ° C.

In the not prepublished EP-A-0372389 thin carbon plates for use as fuel cell separators are obtained by heating and carbonizing polycarbodiimide plates in inert gas to 1,000 ° C.

The object of the present invention is to provide a speaker diaphragm which has the above-mentioned physical properties and yet can be produced at a low cost.

The process for producing the diaphragm according to the present invention is characterized by molding a polycarbodiimide resin into a desired thin shape of a speaker diaphragm and then subjecting the molding to a heat treatment.

### DESCRIPTION OF PREFERRED EMBODIMENTS

The present invention is described in detail below.

In the present invention, the thin carbon plate can be, for example, a thin carbon plate obtained by heat-treating a polycarbodiimide resin. The heat treatment temperature of a polycarbodiimide resin can be 600-3,000°C, preferably 700-2,000°C.

The desired shape includes a conventionally used cone shape, and other shapes such as a ribbon shape, etc.

The polycarbodiimide resin used in the present invention can be a known polycarbodiimide resin or a polycarbodiimide resin which can be produced in the same manner as for known polycarbodiimide resin [reference is made to USP No. 2,941,966; Japanese Patent Publication No.33297/1972; J. Org. Chem., 28, 2069-2075 (1963); Chemical Review, 1981, Vol. 81, No. 4, 619-621; etc.]. It can be easily produced by subjecting an organic diisocyanate to a condensation reaction wherein the elimination of carbon dioxide takes place. The organic diisocyanate used in the production of a polycarbodiimide resin can be any of aliphatic type, alicyclic type, aromatic type, aromatic-aliphatic type, etc. They can be used alone or in combination of two or more (the latter case gives a copolymer).

The polycarbodiimide resin used in the process of the present invention includes a homopolymer or copolymer consisting of at least one repeating unit represented by the formula

-R-N=C=N- (I)

wherein R represents an organic diisocyanate residue.

As the R (organic diisocyanate residue) in the formula (I), there are particularly preferred an aromatic diisocyanate residue [In the present specification, the "organic diisocyanate residue" refers to a portion remaining after subtracting two isocyanate (NCO) groups from an organic diisocyanate molecule.]. Specific examples of the polycarbodiimide resin include the followings. 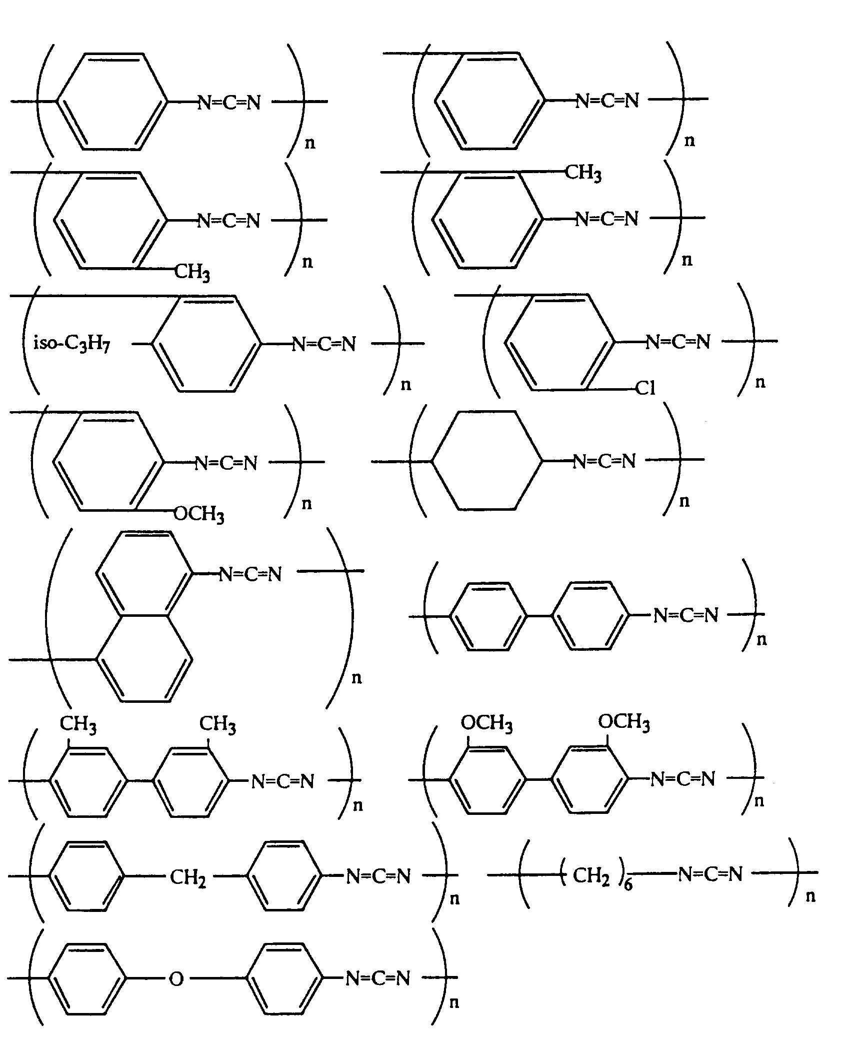
In the above formulas, n is a degree of polymerization and is in the range of 10-10,000, preferably in the range of 50-5,000.

Incidentally, the terminal(s) of the polycarbodiimide resin may be blocked with a monoisocyanate or the like, and the polycarbodiimide resin described above can be obtained in a solution form, or as a powder precipitated from the solution.

Next, the thus obtained polycarbodiimide resin is molded into a desired shape. The molding can be effected,for example, by casting a solution containing a polycarbodiimide resin, obtained by polymerization reaction, or a solution obtained by dissolving a polycarbodiimide resin powder in a solvent, on a flat and smooth glass plate or the like and then removing the solvent. As the solvent, there can be used tetrachloroethylene, trichloroethylene, tetrahydrofuran, dioxane, monochlorobenzene, dichlorobenzene, dimethylformamide, N-methyl-2-pyrrolidone, dimethylacetamide,dimethylsulfoxide, etc.

The molding may also be effected by subjecting a polycarbodiimide resin powder to compression molding, roll molding, injection molding, transfer molding or the like. By the above solution or powder molding, there can be easily obtained a shaped article having a thickness of about 0.1-3mm.

The shaped article is then heat-treated to effect carbonization. The heat treatment for carbonization is effected, for example, by conducting temperature elevation from about room temperature - about 200°C, to 600-3,000°C, preferably 700-2,000°C in vacuum or in a non-oxidizing atmosphere of an inert gas. The temperature elevation is conducted preferably slowly, more preferably at a rate of 30°C/min or less.

Heat treatment at 600°C or above gives a product having substantially desired properties, but heat treatment preferably at 700-2,000°C gives a product of better properties.

In the above heat treatment conditions, the shaped article comes to possess substantially desired properties when it has reached the final temperature. Therefore, it is not necessary to continue heat treatment after the final temperature has been reached.

### [Example]

The present invention is described in more detail by way of Examples.

### Example 1

54 g of a 80:20 mixture of 2,4-tolylene diisocyanate and 2,6-tolylene diisocyanate (the mixture is hereinafter referred to as TDI) was reacted with 0.12 g of a catalyst for carbodiimidization (1-phenyl-3-methylphosphorene oxide) in 500 ml of tetrachloroethylene at 120°C for 4 hours to obtain a polycarbodiimide solution. From this solution was prepared a thin polycarbodiimide plate of 150 µm in thickness by a dry method. The thin plate was heated from room temperature to 1,000°C at a rate of 10°C/min in an inert gas flow to effect carbonisation, to obtain a thin carbon plate of 120 µm in thickness. The properties of the thin carbon plate are shown in the following table.

### Example 2

50 g of p-phenylene diisocyanate was reacted with 0.13 g of a catalyst for carbodiimidization (1-phenyl-3-methylphosphorene oxide) in 880 ml of tetrahydrofuran at 68 C° for 5 hours. The resulting solution was cooled to room temperature, whereby a polycarbodiimide was precipitated. The precipitate was collected by filtration and dried at 100°C for 2 hours to obtain a polycarbodiimide powder. The powder was subjected to press molding at a press temperature of 180°C at a press pressure of 80 kg/cm² to obtain a thin polycarbodiimide plate of 150 µm in thickness. The thin plate was carbonised in the same manner as in Example 1 to obtain a thin carbon plate of 120 µm in thickness. The properties of the thin carbon plate are shown in the following table.

### Example 3

50 g of methylene diphenyldiisocyanate (hereinafter referred to as MDI) was reacted with 0.13 g of a catalyst for carbodiimidization (1-phenyl-3-methylphosphorene oxide) in 820 ml of tetrachloroethylene at 120°C for 6 hours. The subsequent procedure was conducted in the same manner as in Example 2 to obtain a polycarbodiimide powder. From this powder was obtained a thin carbon plate of 120 µm in thickness in the same manner as in Example 2. The properties of the thin carbon plate are shown in the following table.

### Example 4

50 g of MDI was reacted with 0.13 g of a catalyst for carbodiimidization (1-phenyl-3-methylphosphorene oxide) in 820 ml of tetrachloroethylene at 120°C for 6 hours. The resulting solution was cooled to room temperature, whereby a polycarbodiimide was precipitated. The precipitate was collected by filtration and dried at 100°C for 2 hours to obtain a polycarbodiimide powder. From the powder was obtained a thin carbon plate of 120 µm in thickness in the same manner as in Example 2. The properties of the thin carbon plate are shown in the following table.

### Example 5

The thin polycarbodiimide plate obtained in Example 1 was heated from room temperature to 800°C at a rate of 10 °C/min in an inert gas (nitrogen) flow to effect carbonization, to obtain a thin carbon plate of 120 µm. The properties of the thin carbon plate are shown in the following table.

### Comparative Example 1

The properties of a polypropylene film of 150 µm in thickness were measured. The results are shown in the following table.

### Comparative Example 2

The properties of the thin polycarbodiimide plate prepared in Example 1 were measured. The results are shown in the following table.

### Comparative Example 3

The thin polycarbodiimide plate prepared in Example 1 was heated from room temperature to 500°C at a rate of 10 °C/min in an inert gas (nitrogen) flow to effect carbonization, to obtain a thin carbon plate of 130 µm in thickness. The properties of the thin carbon plate are shown in the following table.

**Table**

| Example | Young's modulus | density | E/ρ |
|---|---|---|---|
| 1 | 0.35x10¹² | 1.60 | 0.22x10¹² |
| 2 | 0.40x10¹² | 1.62 | 0.25x10¹² |
| 3 | 0.30x10¹² | 1.57 | 0.19x10¹² |
| 4 | 0.42x10¹² | 1.60 | 0.26x10¹² |
| 5 | 0.29x10¹² | 1.53 | 0.19x10¹² |

| Comparative Example | | | |
|---|---|---|---|
| 1 | 0.023x10¹² | 0.9 | 0.025x10¹² |
| 2 | 0.036x10¹² | 1.22 | 0.024x10¹² |
| 3 | 0.098x10¹² | 1.48 | 0.066x10¹² |

In the above table, Young's modulus (E) has a unit of dyne/cm²; density (ρ) has a unit of g/cm³; and E/ρ refers to a coefficient proportional to propagation speed.

As described above, the speaker diaphragm according to the present invention has a small density (ρ) and a high E/ρ, i.e. a high Young's modulus (E)/density(ρ) ratio and accordingly can reproduce even a high-pitched sound. Further, the diaphragm has high heat resistance and good dimensional stability.

Accordingly, the speaker diaphragm of the present invention is very suitable for use in speakers for automobiles and high quality sound speakers for compact disc players, etc.

## Claims

1. A process for producing a speaker diaphragm by molding a resin into a desired thin shape of a speaker diaphragm and then heat-treating the molding at 600-3,000° C, characterized in that said resin is a polycarbodiimide resin.

2. A process according to claim 1, wherein the heat treatment of the polycarbodiimide resin is effected at 700-2,000° C.

## Patentansprüche

1. Verfahren zur Herstellung einer Lautsprechermembran durch Formen eines Harzes zu einer gewünschten dünnen Form einer Lautsprechermembran und anschließender Wärmebehandlung des Formteils bei 600 - 3000°C, **dadurch charakterisiert**, daß das Harz ein Polycarbodiimidharz ist.

2. Verfahren nach Anspruch 1, worin die Wärmebehandlung des Polycarbodiimidharzes bei 700 - 2000°C bewirkt wird.

## Revendications

1. Procédé pour produire un diaphragme pour haut-parleurs par moulage d'une résine en une forme fine souhaitée de diaphragme de haut-parleurs et ensuite traitement thermique du moulage à 600-3000°C, caractérisé en ce que ladite résine est une résine de polycarbodiimide.

2. Procédé selon la revendication 1, dans lequel le traitement thermique de la résine de polycarbodiimide est effectuée à 700-2000°C.
